# EUROPÄISCHE PATENTSCHRIFT

(11) **EP 0 904 989 B1**
(45) Veröffentlichungstag und Bekanntmachung des Hinweises auf die Patenterteilung: **26.01.2005**
(21) Anmeldenummer: 98115900.7
(22) Anmeldetag: 24.08.1998
(51) Int. Cl.: B60R 21/00, G01P 15/00, B60R 21/01

(54) **Verfahren und Einrichtung zur Aktivierung von Insassenschutzsystemen in Kraftfahrzeugen**
Method and device for activating of passenger safety systems in vehicles
Procédé et dispositif pour l'activation d'un système de protection de passagers

(30) Priorität: 26.09.1997 DE 19742606
(43) Veröffentlichungstag der Anmeldung: 31.03.1999
(73) Patentinhaber: Volkswagen Aktiengesellschaft, 38436 Wolfsburg (DE)
(72) Erfinder: Schwant, Wilfried Dipl.-Ing., 38536 Meinersen (DE)

(56) Entgegenhaltungen:
- EP-A- 0 445 907
- EP-A- 0 728 624
- EP-B- 0 402 027
- US-A- 3 735 398
- US-A- 4 346 914
- US-A- 4 842 301

## Beschreibung

Die Erfindung betrifft ein Verfahren sowie eine Einrichtung zum Aktivieren von Insassenschutzsystemen in Kraftfahrzeugen bei Unfällen, bei welchem die Schutzsysteme abhängig von Sensorschwellwerten aktiviert werden.

Die mittlerweile grundsätzlich verwendeten Insassenschutzsysteme wie Airbag und darüber hinaus auch Rückhaltesysteme wie Gurtstraffer und dergleichen, werden im Falle eines Aufprallunfalles aktiviert. Die Aktivierung erfolgt dabei in den meisten Fällen durch sogenannte Trägheitssensoren. Diese Trägheitssensoren bestehen aus Masseelementen, die bei Verschiebung durch Beschleunigung, bzw. Negativbeschleunigung, eine Ortsveränderung ausführen. Diese Ortsveränderung wird in verschiedener Weise detektiert bzw. als Signal umgesetzt. Überschreiten dabei die Beschleunigungen und die daraus resultierenden Massenverschiebungen vorbestimmbare Grenzwerte, so führt dies zur Auslösung der oben genannten Insassenschutzsysteme, von denen Airbag und Gurtstraffsysteme die bekanntesten sind.

So ist aus der DE-OS 38 34 005 ein Trägheitssensor bekannt, bei dem eine träge Masse auf einer Ebene angeordnet ist. Diese träge Masse ist mit einem Seil verbunden und das Seil ist wiederum mit einer drehbaren Zahnscheibe verbunden. Bei Verzögerung bzw. Beschleunigung wird die träge Masse bewegt und führt über das Seil eine Drehbeaufschlagung der Zahnscheibe herbei. Die Zahnscheibe wiederum ist im Lichtstrahl einer Lichtschranke, so daß die durch die Drehung bewirkten periodischen Unterbrechungen ein von der Drehgeschwindigkeit der Zahnscheibe abhängiges Frequenzsignal liefert. Dies führt zu einer Bewertbarkeit der auf die träge Masse wirkenden Beschleunigung.

Die US-A-4 842 301 offenbart einen akustischen Crash-Sensor für Kraftfahrzeuge. Aus dem aufgenommenen Signal wird ein Interessierender Frequenzbereich ausgefiltert. Das resultierende Signal wird mit einem Schwellwert verglichen. Sobald der Schwellwert eine vorbestimmte Zeit überschritten ist, wird ein entsprechendes Schutzsignal ausgelöst.

Alternativ ist aus der EP-A-0 728 628 ein Verfahren bekannt, bei welchem die Relativgeschwindigkeit zwischen Hindernis und Fahrzeug ermittelt und ausschließlich daraus eine Unfallbewertung erstellt wird.

Diese Verfahren zielen auf eine jeweilige Reaktion der Sicherheitssysteme im Fahrzeug ab.

Es ist weiterhin bekannt, daß die gesamten Insassenschutzsysteme innerhalb weniger Millisekunden ausgelöst bzw. aktiviert werden müssen. Auch ein Aufprallunfall aus hoher Geschwindigkeit läuft, zumindest was die Deformationszeit der Fahrgastzelle betrifft, in Millisekunden bzw. mindestens Sekundenbruchteilen, ab. Auslösendes Element bleibt aber nach wie vor der eigentliche sogenannte Crash-Sensor. Der Crash-Sensor als solches detektiert den Unfall in derjenigen Zeitphase, in der der Aufprall bereits stattgefunden hat und die Deformation der Fahrgastzelle beginnt. Erst zu diesem Zeitpunkt wird dem Fahrzeug eine Negativbeschleunigung aufgeprägt, die der Sensor erfassen kann. Die Verwendung von trägen Massen und entsprechenden Anlenkmitteln hat sich jedoch in vielen Fällen als zu langsam erwiesen. Die Schnelligkeit der Bewertung des Aufpralles ist jedoch ausschlaggebend für eine sichere Aktivierung der Insassenschutzsysteme.

So sind aus der DE 32 05 560 A 1 induktive Beschleunigungssensoren bekannt, die versuchen, das Signal direkter abzugreifen. Jedoch auch hier muß mit entsprechenden beweglichen Massen gearbeitet werden.

Aus der DE 40 40 572 A 1 sowie weiteren Schriften sind eine Vielzahl von Trägheits- und Beschleunigungssensoren bekannt, die jedoch aufgrund beweglicher Teile und einer entsprechend komplizierten Anlenkung zu langsam sind.

Aus der EP 04 84 895 B 1 ist ein Ultraschall-Abstandsmeßverfahren bekannt. Dieses Abstandsmeßverfahren ist zur Verkehrsüberwachung eingesetzt und überwacht sich dem Fahrzeug relativ bewegende Hindernisse, wie vorausfahrende Fahrzeuge oder dergleichen in einem bestimmten Raum bzw. Zeitfenster. Der Einsatz hierbei ist lediglich auf Verkehrsüberwachungsmaßnahmen eingerichtet. Eine Verwendung wird dieses Ultraschallabstandsmeßverfahrens in Verbindung mit der Aktivierung von Insassenschutzsystemen ist in dieser vorgeschlagenen Verfahrensweise hierbei ungeeignet.

Der Erfindung liegt somit die Aufgabe zugrunde, ein Verfahren sowie eine Einrichtung der gattungsgemäßen Art dahingehend weiterzubilden, daß zum einen die Insassenschutzsysteme frühzeitiger aktivierbar sind und zum anderen ebenso schnell eine Information über die Schwere des zu erwartenden Aufpralles zur Einleitung bzw. Aktivierung entsprechender Maßnahmen bzw. Einrichtungen gegeben ist.

Die gestellte Aufgabe wird erfindungsgemäß durch die Verfahrensschritte des Anspruches 1 gelöst.

Hinsichtlich der Einrichtung der gattungsgemäßen Art wird die gestellte Aufgabe erfindungsgemäß durch die kennzeichnenden Merkmale des Anspruches 7 gelöst.

Vorteilhafte Ausgestaltungen des erfindungsgemäßen Verfahrens sind in den Ansprüchen 2 bis 6 angegeben, und vorteilhafte Ausgestaltungen der erfindungsgemäßen Einrichtung sind in den übrigen Ansprüchen angegeben.

Das Wesen der verfahrensgemäßen Erfindung besteht in der Bestimmung folgender Größen,
1. Geschwindigkeit des Unfallgegners sowie eigene Geschwindigkeit,
2. Masse des unfallgegnerischen Fahrzeuges sowie Masse des eigenen Fahrzeuges.

Die Parameter der Geschwindigkeit werden aus der Relativgeschwindigkeit ermittelt. Zum einen liegt die eigene Fahrzeuggeschwindigkeit über das eigene Tachometersystem vor, und zum anderen wird aus der Relativgeschwindigkeit die beispielsweise durch Infrarot, Radar oder Ultraschallsendung nach dem Dopplerprinzip ermittelt wird, gebildet. D. h., daß das Geschwindigkeitssignal bereits vor der Kollision vorliegt, und zur Aufnahme dieses Signales keine wertvolle Zeit während des Unfalles vergeudet wird. Die zweite zusätzliche erfindungsgemäße Maßnahme besteht darin, das Verhältnis der aufeinanderprallenden Massen zu bestimmen. Dies beruht auf der Erkenntnis, daß aus Relativgeschwindigkeit und dem Massenverhältnis der aufeinanderprallenden Fahrzeuge oder Gegenstände die Schwere des Unfalles eindeutig bestimmbar ist. Dabei wird die Masse durch eine Frequenz bzw. Amplitudenmessung derjenigen Schallschwingung ermittelt, die beim Aufprall am eigenen Fahrzeug entsteht. Und zwar ist dabei die Schallschwingung gemeint, die am Rohbau bzw. der Rohkarosse des eigenen Fahrzeuges beim Aufprall entsteht. Wichtig ist hierbei, daß ein wesentlicher Unterschied darin besteht, Beschleunigungs- oder Deformationssensoren nicht zu verwenden. In der Erfindung wird die Schallschwingung am Rohbau des eigenen Fahrzeuges gemessen. Amplitude und ggf. auch die Frequenz dieser Schwingung spiegeln das Masseverhältnis der aufeinanderprallenden Fahrzeuge, bzw. Fahrzeug und Gegenstände, wieder. Daraus kann die Schwere des Aufpralles als solches bzw. die für die Deformation nun vorliegenden Energie ermittelt werden. Der erhebliche Vorteil ist, daß eine solche Information bereits nach der ersten vollzogenen Schallschwingung bzw. nach der ersten oder ggf. sogar nach der halben ersten Schwingungsperiode vorliegt. Der Körperschall des Rohbaus, der beim Aufprall erzeugt wird, liegt dabei zwar im hörbaren Schallspektrum, jedoch hat die maßgebliche Schwingung eine Periodendauer von einer oder weniger Millisekunden. Die Information über den Schallgeber liegt in einer extrem frühen Zeitphase des Unfalles vor. Die ggf. zu korrelierende Relativgeschwindigkeit liegt bereits vor dem Unfall vor.

Abhängig von den so ermittelten Größen der Relativgeschwindigkeit und der Amplitude kann abhängig von darauf gesetzten Grenzwerten nun das ein oder andere Schutzsystem oder ggf. gleichzeitig alle Insassenschutzsysteme aktiviert werden.

Der Vorteil dieses erfindungsgemäßen Verfahrens liegt im wesentlichen darin, daß der Unfall als solches sehr schnell erfaßbar und darüber hinaus auch in der selben kurzen Zeit bereits bewertbar ist.

Einrichtungsgemäß wird hierbei über die entsprechend angegebenen Abstandssensoren ein oder mehrere Schallsensoren verwendet, die am Rohbau bzw. der Rohkarosse des Fahrzeuges befestigt sind. Diese sind von ihrem mechanischen Aufwand so einfach gestaltet bzw. gestaltbar, daß sie gegenüber den meisten anderen bekannten sogenannten Trägheitssensoren zuverlässiger arbeiten. Dies erhöht über die oben genannten funktionalen Vorteile auch die aktive Sicherheit und die ereignisabhängige Verfügbarkeit der einzelnen Insassenschutzsysteme.

In weiterer vorteilhafter Ausgestaltung der Erfindung ist vorgegeben, daß die Geschwindigkeit durch Aussenden von Signalen und Empfangen von Reflexionssignalen nach dem Dopplerprinzip ermittelt wird. Die Ermittlung der Relativgeschwindigkeit sowie die Kenntnis der eigenen Fahrzeuggeschwindigkeit über die fahrzeuginterne Tachometereinrichtung, läßt die Bewertung einer Vielzahl von einzelnen Geschwindigkeiten, wie beispielsweise die eigene Geschwindigkeit, die Geschwindigkeit des entgegenkommenden Hindernisses oder des Fremdfahrzeuges, die sich daraus ergebende Relativgeschwindigkeit, sowie auch die Bewertung möglicherweise eines stehenden Hindernisses zu. Dabei wird, wie bereits gesagt, die nach dem Dopplerprinzip ermittelte Relativgeschwindigkeit mit der eigenen Geschwindigkeit korreliert.

In weiterer vorteilhafter Ausgestaltung des Verfahrens können verschiedene Methoden zweckmäßig sein, von denen sich drei Vorgehensweisen in Verbindung mit dem erfindungsgemäßen Verfahren als besonders zweckmäßig erwiesen haben. Dazu gehört die Geschwindigkeitsmessung über Infrarotstrahlung, über hochfrequente Radarsignale oder aber über Ultraschall. Diese drei Methoden bzw. Vorgehensweisen gewähren jeweils eine entsprechende zuverlässige Auswertung, die mit dem erfindungsgemäßen Verfahren gut kombinierbar ist.

In weiterer vorteilhafter Ausgestaltung des erfindungsgemäßen Verfahrens wird bzw. werden in Abhängigkeit der Schwere der Kollision, die sich nach den oben genannten Maßgaben ermitteln läßt, entweder nur Gurtstraffsysteme oder Gurtstraffsysteme gemeinsam mit Airbag aktiviert. Weitere Insassenschutzsysteme sind denkbar, die dann ebenfalls, abhängig von der Schwere des Unfalles, entweder einzeln oder kumulativ ausgelöst werden.

Einrichtungsgemäß wird die gestellte Aufgabe dadurch gelöst, daß der Rohbau des Kraftfahrzeuges körperschallschlüssig mit einem Schallsensor verbunden ist, daß mindestens ein Sensor zur Erfassung der Geschwindigkeit bzw. der Relativgeschwindigkeit zu einem kollidierenden Fahrzeug oder Gegenstand vorgesehen ist, und daß über eine elektronische Bewertungseinheit die Schwere der Kollision ermittelbar und die Insassenschutzsysteme aktivierbar sind. Kern ist hierbei ebenfalls der erfindungsgemäße Gedanke, daß zum einen ein Körperschallsignal am Rohbau des Kraftfahrzeuges ermittelt wird und zum anderen die Relativgeschwindigkeit zum kollidierenden Fahrzeug oder Gegenstand ermittelt wird. Aus dem Körperschallsignal des Rohbaus kann bei Bewertung der Amplitude das Massenverhältnis der kollidierenden Massen bestimmt werden; auch die Auswertung der Frequenz liefert weitergehende Informationen. Sodann werden Geschwindigkeitssignal und Schallsignal miteinander korreliert und es kann daraus die Schwere des Unfalles ermittelt werden. Davon abhängig können sodann, wie oben bei der Offenbarung der verfahrensgemäßen Erfindung bereits dargestellt, die Insassenschutzsysteme entsprechend aktiviert werden.

Hierbei ist es besonders vorteilhaft, einen Schallsensor zu verwenden. Es hat sich gezeigt, daß, wie oben bereits dargestellt, ein entsprechenden Crash-Signal, bedingt durch die Deformation während des Aufpralles, bereits ein qualifiziertes und auswertbares Signal liefert, bereits innerhalb der ersten Schwingungsamplitude, ggf. sogar der ersten halben Periode. Der Abgriff eines solchen maßgeblichen Signales für die Aktivierung der Insassenschutzsysteme ist gegenüber herkömmlichen Trägheitssensoren deutlich zuverlässiger, da die Sensorgestaltung als solches einfacher ist.

Auf mechanisch bewegliche Teile kann gänzlich verzichtet werden, wenn Schallsensoren beispielsweise in piezoelektrischer Ausführung verwendet werden. Darüberhinaus liegt das Schaltsignal noch schneller vor, als dies Beschleunigungssensoren realisieren können, weil innerhalb des Sensors keine Massen mehr bewegt werden müssen.

Da die Geschwindigkeit bzw. die Relativgeschwindigkeit bereits kurz vor dem Unfall bzw. der Kollision ermittelt wird, wird für diese Aktion keine kostbare Zeit während der Deformationsphase beim Unfall verdeudet. Obwohl letztendlich zwei Sensorsignale ausgewertet werden, bleibt das System extrem schnell.

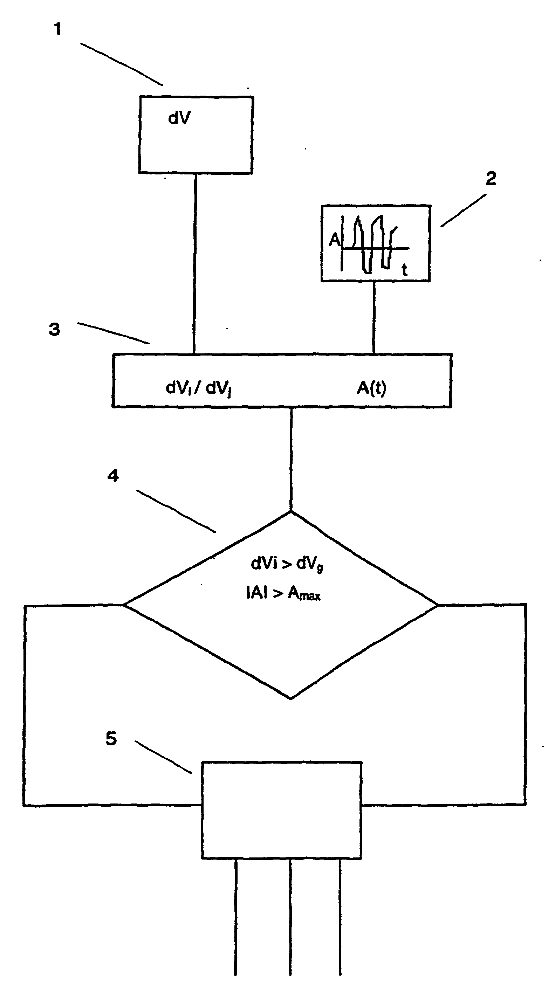

Die Erfindung ist in verfahrensgemäßer sowie auch in einrichtungsgemäßer Weise in der Zeichnung dargestellt und nachfolgend noch näher beschrieben.

Die Zeichnung zeigt die wesentlichen einrichtungsgemäßen Elemente in einer derartigen Verknüpfung, daß auch die erfindungsgemäße Verfahrensweise daraus ersichtlich ist.

Am Fahrzeug, welches hier nicht weiter dargestellt ist, ist ein Geschwindigkeitssensor 1 angeordnet. Dieser befindet sich im Frontbereich des Fahrzeuges und ist entweder als Infrarotsensoranordnung oder als Radarsignalanordnung oder als Ultraschallanordnung ausgeführt. In allen drei Versionen kann nach dem Doppler-Prinzip die Geschwindigkeit des entgegenkommenden Fahrzeuges bzw. die Relativgeschwindigkeit der beiden sich aufeinanderzubewegenden Fahrzeuge oder die Relativgeschwindigkeit eines Fahrzeuges zu einem stehenden Gegenstand ermittelt werden. Desweiteren ist ein Schallsensor 2 irgendwo schallschlüssig am Rohbau des Fahrzeuges angeordnet. Der Aufprall erzeugt im Rohbau einen spezifischen Schall, wobei gemäß der gewonnen Erkenntnis, die zur Erfindung geführt hat, Frequenz und Amplitude von dem Masseverhältnis der kollidierenden Fahrzeuge, und weiteren Parametern abhängig ist. Der Schallsensor 2 ist dabei so an dem Rohbau des Fahrzeuges angeordnet, daß eine schallschlüssige Verbindung gegeben ist und jedweder Körperschall, der auf den Rohbau einwirkt oder von demselben erzeugt wird, vom Schallsensor direkt erfaßbar ist. Der Rohbau selbst ist durch seine festen Schweißverbindungen oder Zwangsverbindungselemente in sich durchgehend schallschlüssig. Von daher ist es theoretisch unerheblich, an welcher Stelle der Schallsensor angeordnet ist. Um jedoch Fehlfunktionen auszuschließen ist es zweckmäßig, diesen an den tragenden Elementen des Rohbaus anzuordnen, die im Frontalbereich der Deformation relativ heftig ausgesetzt sind.

Beide Signale werden in eine Elektronik 3 eingelesen und entsprechend konditioniert. Aus dem Geschwindigkeitssignal wird beispielsweise unter Zuhilfenahme des eigenen Tachometersignales die Relativgeschwindigkeit ermittelt und ggf. ins Verhältnis gesetzt. Aus dem Schallsensorsignal 2 wird ein entsprechendes auflösbares Signal erstellt, wobei bereits innerhalb der ersten Halbperiode die Flanken und die Amplitude bewertet werden.

Die in dieser Logikeinheit der Elektronik 2 aufbereiteten elektronischen Informationen werden hernach einer Bewertungseinheit 4 zugeführt, in welcher beispielsweise Grenzwerte bzw. Signalschwellwerte abgelegt sind, bei deren Überschreitung das ein oder andere Insassenschutzsystem oder ggf. alle Insassenschutzsysteme gemeinsam ausgelöst werden. Diese Bewertung kann entweder in Form reiner Schwellwerte, die werksseitig oder nachträglich einstellbar sind, festgelegt sein oder aber es können eine begrenzte Anzahl von sogenannten Mustern als Datenfeld hinterlegt sein. Dabei können eine begrenzte Anzahl vorgegebener Muster, beispielsweise vorgegebener Geschwindigkeits- und Amplitudensignalverhältnisse abgelegt sein, die die ein oder andere Unfallsituationen repräsentieren. Davon abhängig kann dann entweder nur das Gurtstraffsystem oder auch das Gurtstraffsystem gemeinsam mit dem Airbagsystem aktiviert werden. Weitere Insassenschutzsysteme sind möglich, die auch hierbei abhängig von der Schwere des Unfalles selektiv aktivierbar sind.

Wie oben bereits ausgeführt, führt diese Einrichtung bzw. diese verfahrensgemäße Vorgehensweise zu einer sehr schnellen Bereitstellung eines qualifizierten Entscheidungskriteriums darüber, ob und welche Insassenschutzsysteme aktiviert werden sollen. Auch die Auslösung des eigentlichen Signales im Falle eines Maximalcrashes erfolgt hierbei kurzfristiger, als dies bei den meisten herkömmlichen Trägheitssensoren möglich ist.

Darüber hinaus ist der Unfall als solches in einer extrem frühen Zeitphase qualifizierbar.

## Patentansprüche

1. Verfahren zum Aktivieren von Insassenschutzsystemen in Kraftfahrzeugen bei Unfällen, bei welchen die Schutzsysteme abhängig von Sensorschwellwerten aktiviert werden, durch
a) Messung oder Ermittlung der Relativgeschwindigkeit dV des eigenen Fahrzeugs zu einem kollidierenden Fahrzeug oder Gegenstand vor einer Kollision.
b) Messung der Frequenz und/oder der Amplitude A der direkt am Fahrzeugrohbau durch die Kollision auftretenden Schallschwingung U,
c) Ermittlung einer Masse des kollidierenden Fahrzeugs oder Gegenstands aus der gemessenen Frequenz und/oder Amplitude der Schallschwingung U und
d) Ermittlung der Schwere der Kollision aus der Relativgeschwindigkeit dV und der Masse des kollidierenden Fahrzeugs oder Gegenstands und Aktivierung der Schutzsysteme bei Überschreitung vorgebbarer Geschwindigkeits- und Amplitudengrenzwerte dVx und Ax.

2. Verfahren zum Aktivieren von Insassenschutzsystemen nach Anspruch 1,
**dadurch gekennzeichnet,**
**daß** die Relativgeschwindigkeit durch Aussenden von Signalen um Empfangen von Reflexionssignalen nach dem Dopplerprinzip ermittelt wird.

3. Verfahren zum Aktivieren von Insassenschutzsystemen nach Anspruch 1 oder 2,
**dadurch gekennzeichnet,**
**daß** die Relativgeschwindigkeitsmessung mit Infrarotstrahlung vorgenommen wird.

4. Verfahren zum Aktivieren von Insassenschutzsystemen nach Anspruch 1 oder 2,
**dadurch gekennzeichnet,**
**daß** die Relativgeschwindigkeitsmessung mit hochfrequenten Radarsignalen vorgenommen wird.

5. Verfahren zum Aktivieren von Insassenschutzsystemen nach Anspruch 1 oder 2,
**dadurch gekennzeichnet,**
**daß** die Relativgeschwindigkeitsmessung mit Ultraschall vorgenommen wird.

6. Verfahren zum Aktivieren von Insassenschutzsystemen nach einem oder mehreren vorhergehenden Ansprüchen,
**dadurch gekennzeichnet,**
**daß** in Abhängigkeit der Schwere der Kollision entweder nur Gurtstraffsystem oder Gurtstraffsystem zusammen mit dem Airbag aktiviert werden.

7. Verfahren zum Aktivieren von Insassenschutzsystemen nach einem oder mehreren vorhergehenden Ansprüchen,
**dadurch gekennzeichnet,**
**daß** die Schwere der Kollision durch Vergleich der ermittelten Relativgeschwindigkeit dV und der Amplitude A mit einem oder mehreren abgespeicherten Mustern gegebener Werte ermittelt wird, und daß daraus die jeweilig zugrundezulegenden Grenzwerte dVx und Ax ad hoc ermittelt werden.

8. Einrichtung zum Aktivieren von Insassenschutzsystemen eines Kraftfahrzeugs mit
Sensoren (1, 2), über welche bei Unfällen die Schutzsysteme abhängig von Sensorschwellwerten aktivierbar sind, wobei einer der Sensoren ein Schallsensor (2) ist, der mit dem Rohbau des Kraftfahrzeugs körperschallschlüssig verbindbar ist, und ein weiterer der Sensoren ein Sensor (1) zur Erfassung der Geschwindigkeit oder Relativgeschwindigkeit zu einem kollidierenden Fahrzeug oder Gegenstand ist, und
einer elektronischen Bewertungseinheit (4) zur Ermittlung einer Masse des kollidierenden Fahrzeugs oder Gegenstands aus einer Frequenz und/oder Amplitude der von dem Schallsensor (2) detektierten Schallschwingung und zur weiteren Ermittlung der Schwere der Kollision aus der erfassten Geschwindigkeit oder Relativgeschwindigkeit und der ermittelten Masse sowie zur Ausgabe entsprechender Aktivierungssignale an die Insassenschutzsysteme.

9. Einrichtung zum Aktivieren von Insassenschutzsystemen bei Kraftfahrzeugen, nach Anspruch 8,
**dadurch gekennzeichnet,**
**daß** der Schallsensor (2) im vorderen Bereich des Rohbaues angeordnet ist.

10. Einrichtung zum Aktivieren von Insassenschutzsystemen bei Kraftfahrzeugen,
nach Anspruch 8 oder 9,
**dadurch gekennzeichnet,**
**daß** der Geschwindigkeitssensor (1) ein Infrarotsensor, oder ein HF-Radarsensor oder ein Ultraschallsensor ist.

11. Einrichtung zum Aktivieren von Insassenschutzsystemen bei Kraftfahrzeugen nach einem oder mehreren der vorhergehenden Ansprüche,
**dadurch gekennzeichnet,**
**daß** die Sensoren (1, 2,) mit einer elektronischen Einheit (3) verschaltet sind, derart, daß aus dem Geschwindigkeitssignal ein Relativgeschwindigkeitssignal ermittelbar ist, und aus dem Schallsignal ein zeitaufgelöstes Signal ermittelbar ist.

12. Einrichtung zum Aktivieren von Insassenschutzsystemen bei Kraftfahrzeugen nach einem vor mehreren der vorhergehenden Ansprüche,
**dadurch gekennzeichnet,**
**daß** die elektronische Einheit (3) mit einer elektronischen Bewertungseinheit (4) verschaltet ist, in welcher die konditionierten Sensorsignale dV und A mit Grenzwerten vergleichbar sind und bei Überschreitung die entsprechenden Aktivierungssignale zu den Insassenschutzsystemen (5) generieren.

13. Einrichtung zum Aktivieren von Insassenschutzsystemen bei Kraftfahrzeugen, nach einem oder mehreren der vorhergehenden Ansprüche,
**dadurch gekennzeichnet,**
**daß** die elektronische Bewertungseinheit (4) mit einem Speicherelement und einem Vergleicher ausgestattet ist.

14. Einrichtung zum Aktivieren von Insassenschutzsystemen bei Kraftfahrzeugen, nach einem oder mehreren der vorhergehenden Ansprüche,
**dadurch gekennzeichnet,**
**daß** ein nichtflüchtiges Speicherelement innerhalb der Bewertungseinheit (4) vorgesehen ist, in welchem ein mit Signalmustem dVi und Ai versehenes Datenfeld abgespeichert ist.

## Claims

1. Method for activating vehicle occupant protection systems in motor vehicles in the case of accidents, in which the protection systems are activated as a function of sensor threshold values, by
a) measuring or determining the relative velocity dV of the driver's own vehicle with respect to a colliding vehicle or object before a collision,
b) measuring the frequency and/or the amplitude A of the sound oscillation U which occurs directly at the shell of the vehicle as a result of the collision,
c) determining a mass of the colliding vehicle or object from the measured frequency and/or amplitude of the sound oscillation U, and
d) determining the severity of the collision from the relative velocity dV and the mass of the colliding vehicle or object and activating the protection systems when predefinable velocity and amplitude limiting values dVx and Ax are exceeded.

2. Method for activating vehicle occupant protection systems according to Claim 1, **characterized in that** the relative velocity is determined by emitting signals and receiving reflective signals using the Doppler principle.

3. Method for activating vehicle occupant protection systems according to Claim 1 or 2, **characterized in that** the relative velocity is measured using infrared radiation.

4. Method for activating vehicle occupant protection systems according to Claim 1 or 2, **characterized in that** the relative velocity is measured using highfrequency radar signals.

5. Method for activating vehicle occupant protection systems according to Claim 1 or 2, **characterized in that** the relative velocity is measured using ultrasonic sound.

6. Method for activating vehicle occupant protection systems according to one or more of the preceding claims, **characterized in that** either only the seatbelt pretensioning system or the seatbelt pretensioning system together with the airbag are activated as a function of the severity of the collision.

7. Method for activating vehicle occupant protection systems according to one or more of the preceding claims, **characterized in that** the severity of the collision is determined by comparing the relative velocity dV which is determined and the amplitude A with one or more stored patterns of given values, and **in that** the respective underlying limiting values dVx and Ax are determined from them in an ad hoc fashion.

8. Device for activating vehicle occupant protection systems of a motor vehicle, having sensors (1, 2) by means of which the protection systems can be activated as a function of sensor threshold values in the case of accidents, one of the sensors being a sound sensor (2) which can be connected to the shell of the motor vehicle so as to pick up structure-borne sound signals, and another of the sensors is a sensor (1) for sensing the velocity or relative velocity with respect to a colliding vehicle or object, and an electronic evaluation unit (4) for determining a mass of the colliding vehicle or object from a frequency and/or amplitude of the sound oscillation which is detected by the sound sensor (2), and for also determining the severity of the collision from the sensed velocity or relative velocity and the determined mass, and for outputting corresponding activation signals to the vehicle occupant protection systems.

9. Device for activating vehicle occupant protection systems in motor vehicles according to Claim 8, **characterized in that** the sound sensor (2) is arranged in the front region of the shell.

10. Device for activating vehicle occupant protection systems in motor vehicles according to Claim 8 or 9, **characterized in that** the velocity sensor (1) is an infrared sensor or an RF radar sensor or an ultrasonic sound sensor.

11. Device for activating vehicle occupant protection systems in motor vehicles according to one or more of the preceding claims, **characterized in that** the sensors (1, 2) are connected to an electronic unit (3) in such a way that a relative velocity signal can be determined from the velocity signal and the signal which is resolved over time can be determined from the sound signal.

12. Device for activating vehicle occupant protection systems in motor vehicles according to one or more of the preceding claims, **characterized in that** the electronic unit (3) is connected to an electronic evaluation unit (4) in which the conditioned sensor signals dV and A can be compared with limiting values and when exceeded they generate the corresponding activation signals for the vehicle occupant protection systems (5).

13. Device for activating vehicle occupant protection systems in motor vehicles, according to one or more of the preceding claims, **characterized in that** the electronic evaluation unit (4) is equipped with a memory element and a comparator.

14. Device for activating vehicle occupant protection systems in motor vehicles, according to one or more of the preceding claims, **characterized in that** a non-volatile memory element is provided within the evaluation unit (4), in which memory element a data field which is provided with signal patterns dVi and Ai is stored.

## Revendications

1. Procédé pour l'activation de systèmes de protection des occupants de véhicules automobiles en cas d'accident, dans lequel les systèmes de protection sont activés en fonction de valeurs seuil de capteurs, par
a) mesure ou détection de la vitesse relative dV du véhicule propre par rapport à un véhicule en collision ou un objet avant une collision,
b) mesure de la fréquence et/ou de l'amplitude A de la vibration sonore U se produisant directement sur la structure de la carrosserie du véhicule du fait de la collision,
c) détection d'une masse du véhicule en collision ou de l'objet à partir de la fréquence et/ou de l'amplitude mesurée de la vibration sonore U et
d) détection de la puissance de la collision à partir de la vitesse relative dV et de la masse du véhicule en collision ou de l'objet et activation des systèmes de protection lors d'un dépassement de valeurs limites de vitesse et d'amplitude dVx et Ax.

2. Procédé pour l'activation de systèmes de protection des occupants selon la revendication 1,
**caractérisé en ce que**
la vitesse relative est détectée par l'émission de signaux et la réception de signaux de réflexion selon le principe de Doppler.

3. Procédé pour l'activation de systèmes de protection des occupants selon la revendication 1 ou 2,
**caractérisé en ce que**
la mesure de la vitesse relative est effectuée avec un rayonnement infrarouge.

4. Procédé pour l'activation de systèmes de protection des occupants selon la revendication 1 ou 2,
**caractérisé en ce que**
la mesure de la vitesse relative est effectuée avec des signaux radar de haute fréquence.

5. Procédé pour l'activation de systèmes de protection des occupants selon la revendication 1 ou 2,
**caractérisé en ce que**
la mesure de la vitesse relative est effectuée par des ultrasons.

6. Procédé pour l'activation de systèmes de protection des occupants selon l'une quelconque ou plusieurs des revendications précédentes,
**caractérisé en ce que**
soit seulement le système d'enrouleur de ceinture de sécurité, soit le système d'enrouleur de ceinture de sécurité conjointement avec l'airbag sont activés en fonction de la puissance de la collision.

7. Procédé pour l'activation de systèmes de protection des occupants selon l'une quelconque ou plusieurs des revendications précédentes,
**caractérisé en ce que**
la puissance de la collision est détectée par comparaison de la vitesse relative détectée dV et de l'amplitude A avec un ou plusieurs modèles mémorisés de valeurs données, et **en ce que** l'on en déduit sur place les valeurs limites respectives dVx et Ax destinées à être utilisées comme base.

8. Dispositif pour l'activation de systèmes de protection des occupants d'un véhicule automobile, comprenant
des capteurs (1, 2), par l'intermédiaires desquels, en cas d'accident, les systèmes de protection peuvent être activés en fonction de valeurs seuil de capteurs, l'un des capteurs étant un capteur sonore (2), qui peut être relié à la structure de la carrosserie du véhicule automobile par l'intermédiaire du bruit structurel, et un autre des capteurs étant un capteur (1) pour la détection de la vitesse ou de la vitesse relative par rapport à un véhicule en collision ou un objet, et
une unité d'analyse électronique (4) pour la détection d'une masse du véhicule en collision ou de l'objet à partir d'une fréquence et/ou d'une amplitude de la vibration sonore détectée par le capteur sonore (2) et en vue de la détection supplémentaire de la puissance de la collision à partir de la vitesse ou de la vitesse relative détectée et de la masse détectée ainsi que pour la fourniture de signaux d'activation correspondants aux systèmes de protection des occupants.

9. Dispositif pour l'activation de systèmes de protection des occupants de véhicules automobiles selon la revendication 8,
**caractérisé en ce que**
le capteur sonore (2) est disposé dans la partie avant de la structure de la carrosserie.

10. Dispositif pour l'activation de systèmes de protection des occupants de véhicules automobiles selon la revendication 8 ou 9,
**caractérisé en ce que**
le capteur de vitesse (1) est un capteur infrarouge, un capteur radar HF ou un capteur à ultrasons.

11. Dispositif pour l'activation de systèmes de protection des occupants de véhicules automobiles selon l'une quelconque ou plusieurs des revendications précédentes,
**caractérisé en ce que**
les capteurs (1, 2) sont mis en circuit avec une unité électronique (3) de telle sorte que l'on puisse détecter, à partir du signal de vitesse, un signal de vitesse relative, et que l'on puisse détecter à partir du signal sonore un signal à résolution temporelle.

12. Dispositif pour l'activation de systèmes de protection des occupants de véhicules automobiles selon l'une quelconque ou plusieurs des revendications précédentes,
**caractérisé en ce que**
l'unité électronique (3) est mise en circuit avec une unité d'analyse électronique (4), dans laquelle les signaux de capteurs conditionnés dV et A peuvent être comparés à des valeurs limites et, dans le cas d'un dépassement, génèrent les signaux d'activation correspondants pour les systèmes de protection des occupants (5).

13. Dispositif pour l'activation de systèmes de protection des occupants de véhicules automobiles selon l'une quelconque ou plusieurs des revendications précédentes,
**caractérisé en ce que** l'unité d'analyse électronique (4) est munie d'un élément de mémoire et d'un comparateur.

14. Dispositif pour l'activation de systèmes de protection des occupants de véhicules automobiles selon l'une quelconque ou plusieurs des revendications précédente,
**caractérisé en ce qu'**
un élément de mémoire non volatile est prévu à l'intérieur de l'unité d'analyse (4), dans lequel est mémorisé un champ de données pourvu d'un modèle de signaux dVi et Ai.
